# EUROPÄISCHE PATENTSCHRIFT

(11) **EP 3 853 137 B1**
(45) Veröffentlichungstag und Bekanntmachung des Hinweises auf die Patenterteilung: **11.05.2022**
(21) Anmeldenummer: 19783427.8
(22) Anmeldetag: 20.09.2019
(51) Int. Cl.: B65D 8/02, B65D 25/42, B29C 65/00

(54) **KUNSTSTOFF-BEHÄLTER**
PLASTIC CONTAINER
CONTENANT EN MATIÈRE SYNTHÉTIQUE

(30) Priorität: 21.09.2018 DE 202018004383 U
(43) Veröffentlichungstag der Anmeldung: 28.07.2021
(73) Patentinhaber: Mauser-Werke GmbH, 50321 Brühl (DE)
(72) Erfinder: WEYRAUCH, Detlev, 52372 Kreuzau-Untermaubach (DE)
(86) Internationale Anmeldenummer: PCT/EP2019/000275
(87) Internationale Veröffentlichungsnummer: WO 2020/057775

(56) Entgegenhaltungen:
- EP-A1- 0 366 129
- WO-A2-2009/133265
- DE-A1- 3 823 119
- US-A1- 2017 113 829

## Beschreibung

Die Erfindung betrifft einen Behälter aus thermoplastischem Kunststoff zur Lagerung und zum Transport von flüssigen oder fließfähigen Füllgütern, der im Blasformverfahren hergestellt und an einer Behälteröffnung im Behälteroberboden mit einem aufgeschweißten, im Spritzgussverfahren vorgefertigten Spundstutzenteil mit am oberen Ende versehenen Innengewinde zum Verschließen der Behälteröffnung versehen ist,

Üblicherweise handelt es sich bei derartigen, blasgeformten Kunststoff-Behältern um Fässer mit Handhabungsring in Fassgrößen von 120 Liter bis 250 Liter. Am gebräuchlichsten sind Fässer, die ein Fassungsvermögen von 220 Liter aufweisen, aber auch andere sind im Markt vertreten. Ebenfalls bekannt sind andere Kunststoff-Behälter wie z. B. 30 oder 60 Liter-Kanister mit Spundstopfen-Verschlüssen. All diese Kunststoff-Behälter werden zur Lagerung und zum Transport von flüssigen oder fließfähigen Füllgütern genutzt und sind zumeist mit einer größeren 2-Zoll- und einer kleineren %-Zoll-Spundöffnung ausgestattet, wobei der größere Spund für die Befüllung und Entnahme des Füllguts und der kleinere Spund als Belüftungsspund während des Befüll- und Entnahmevorgangs dient.

In der Großchemie werden regelmäßig große Mengen derartiger Kunststoff-Behälter am Ende des Herstellungsprozesses von chemischen Flüssigkeiten fast nur noch in automatischen Abfüllanlagen abgefüllt. Dabei wird der Kunststoff-Behälter so positioniert, dass die Spundstutzen immer präzise ausgerichtet sind und automatische Ausdrehvorrichtungen die Spundstopfen erfassen und ausdrehen können. Danach fährt eine Abfülllanze in die größere 2-Zoll-Spundöffnung und das flüssige Füllgut wird mit hohem Fülldruck in die Behälter eingepumpt. Nach Abschluss des Abfüllvorgangs werden die Spundstopfen wieder von den Ausdrehautomaten in den Einfüll-/Entnahmestutzen und den Belüftungsstutzen eingeschraubt.

### Problematik:

Kunststoff-Behälter mit Spundstopfen werden weltweit in großen Stückzahlen größtenteils im Blasformverfahren hergestellt. Dabei werden die Hohlkörper aus einem extrudierten schlauchförmigen Vorformling zwischen zwei horizontal zusammenfahrbaren Blasformhälften unter Einwirkung von eingeblasener Druckluft zu ihrer endgültigen Form aufgeblasen. Beim Zusammenfahren der beiden Blasformhälften wird der schlauchförmige Vorformling oben und unten abgequetscht und verschweißt. Normalerweise wird der Unterboden des Behälterkörpers oben in der Blasform und der Oberboden des Behälterkörpers mit den Spundöffnungen unten in der Blasform ausgebildet. Mittels verfahrbarer Spreiz- und Blasdorne kann die Länge der Abquetschnaht und die exakte Position der Spundstutzen eingestellt werden. Die Formgebung des Behälterkörper-Unterbodens oben in der Blasform ist vergleichsweise einfach, weil der Unterboden als Standfläche für den Behälterkörper möglichst flach und eben ggfs. mit Versteifungssicken ausgebildet sein soll, während sich die Ausformung des Behälterkörper-Oberbodens mit am Außenumfang umlaufenden Handhabungsring, mit bombiertem oder höher gelegtem Mittelteil und mit zwei sich diametral gegenüberliegenden in Spundmulden tiefer gelegten Spundstutzen erheblich schwieriger gestaltet. Die besondere Kunst der Blasformtechnik besteht in einer ausgeklügelten Wanddickensteuerung des extrudierten schlauchförmigen Vorformlings, denn am fertigen Behälterkörper soll möglichst überall die gleiche Wanddicke vorliegen. Das ist verfahrenstechnisch nicht ganz möglich, denn an beiden Enden der oberen und unteren Abquetschnaht des schlauchförmigen Vorformlings liegt immer eine Materialverdickung vor. Im Unterboden des Behälterkörpers werden die beiden Materialverdickungen möglichst flach gezogen. Die sich im Oberboden des Behälterkörpers ergebenden Materialverdickungen werden dazu ausgenutzt, an zwei unterhalb der Blasform angeordneten Blasdornen im Behälterkörper-Oberboden zwei Spundstutzen mit Innengewinde auszuformen. Die beiden Spundstutzen sind jeweils in einer Spundmulde bzw. einem Spundgehäuse vertieft im Oberboden angeordnet. Der am Außenumfang des Oberbodens umlaufende Handhabungsring wird während des Blasformvorgangs mittels vertikal verschiebbarer Formschieber aus dem Kunststoffmaterial des schlauchförmigen Vorformlings angeformt. Nach Beendigung des Blasformvorgangs werden vor Entnahme des fertigen Behälterkörpers aus der Blasform die Blasdorne aus den angeformten Spundstutzen mit Innengewinde herausgeschraubt. Während die vertikale Behälterwandung und der Unterboden des Hohlkörpers vergleichsweise schnell abgekühlt sind, benötigen die Bauteile wie Handhabungsring und Spundstutzen mit erhöhtem Materialeinsatz verständlicherweise eine höhere Abkühlzeit bis auf Raumtemperatur. Da an den Spundstutzen durch Materialverdickungen auf der einen Seite sowie durch eine einseitig einmündende Quetschnaht auf der anderen Seite und die Nähe des massiven Handhabungsrings nicht in alle Richtungen die gleichen Abkühlbedingungen vorliegen, kann dies als Folge des Blasformens, ggfs. mit Nachkühlung unter Innendruck, zu Materialverzug und Abweichungen der geometrischen Abmessungen führen.

Dabei können sich z. B. die Spundöffnungen in den Spundstutzen ovalisieren, so dass die Dichtung eines eingeschraubten Spundstopfens auf dem Dichtungssitz nicht mehr vollständig abdichten kann und der Spundverschluss insbesondere beim Umfallen eines mit flüssigem Füllgut befüllten Behälters undicht wird. Zudem können sich an der einseitig einmündenden Quetschnaht störende filmartige Kunststoffanhängsel ausbilden, die sich hinderlich auf den Sitz des eingeschraubten Spundstopfens auswirken.

Andererseits können sich die Spundstutzen selbst in eine leichte Schrägstellung verziehen, was später bei der Abfüllung von derartigen Behältern zu Problemen in den automatischen Abfüllanlagen führen kann, wenn z. B. der Abschraubautomat für den Spundstopfen nicht exakt in die oberen Ausnehmungen im Spundstopfen für das Schraubkopf-Werkzeug eingreifen kann oder die vertikal herabfahrenden Fülllanzen für eine Druckbefüllung nicht präzise in die Spundöffnungen der Spundstutzen einfahren können. Dadurch verursachte Störungen in automatischen Abfüllanlagen der Großchemie kosten Zeit und Geld und führen zu unzufriedenen Kunden.

### Stand der Technik:

Aus der Druckschrift DE 38 23 119 A1 ist ein blasgeformtes Kunststoff-Spundfass bekannt, bei dem ein separat vorgefertigter Spund-Gewindestutzen (Spundlochnippel mit kragenförmigem Muffenstück) auf einen am blasgeformten Spundfass ausgebildeten Spundstutzen-Stumpf aufgeschweißt wird. Der Spundstutzen-Stumpf ist nach dem Blasformvorgang zunächst geschlossen und muss nach Abkühlen des Kunststoff-Fasses oben abgeschnitten und für das anzuschweißende Muffenstück des Gewindestutzens passend ausgeformt bzw. angepasst werden. Danach wird der Spund-Gewindestutzen immer mit exakter Ausrichtung zur zentralen Vertikalachse des Spundstutzen-Stumpfes positioniert und präzise vertikal ausgerichtet darauf aufgeschweißt.

Die Veröffentlichung US 2017/113829 A1 beschreibt ein Behältnis, insbesondere eine im Blasformverfahren hergestellte, in der Blasform gefüllte und verschlossene Kunststoff-Ampulle oder Flasche, mit einem sich an den Behältniskörper anschließenden hülsenartigen Halsteil, das einen Sitz für einen vorgeformten, axial erstreckenden Einsatz bildet. Der Einsatz wird nach Befüllen des Behältniskörpers in das erhitzte Halsteil eingedrückt und durch eine Anschmelzverbindung mit hoher mikrobiologischer Dichtigkeit eingeformt und fixiert. Derartige aus Kunststoff hergestellte Behältnisse weisen größenordnungsmäßig ein Gesamtvolumen von wenigen ml Füllvolumen (z. B. 30 ml) auf. Kleinstbehälter mit einem Füllvolumen von 1,5 ml sind zur Aufnahme von kosmetischen oder medizinischen Produkten wie z. B. Augentropfen vorgesehen. Der Einsatz kann als Pipette zur Abgabe von einzelnen Tropfen ausgebildet sein oder für eine Aufnahme von Impfstoffen mit einem durchstechbaren Bereich für eine Injektionsnadel versehen sein.

In der Vorveröffentlichung WO 2009/133265 A2 wird ein dünnwandiger, einseitig offener hülsenartiger Kunststoffbehälter mit einem Schraubgewindestück an der offenen Behältermündung beschrieben. Das separat vorgefertigte Schraubgewindestück ist mit einer dünnwandigen zylinderförmigen Schürze die offene Behältermündung eingesteckt und in entsprechend axialer Ausrichtung zur zentralen Längsachse des hülsenartigen Kunststoffbehälters z. B. durch Reibschweißung fest eingeschweißt.

Ein weiteres blasgeformtes Kunststoff-Spundfass ist in der EP 0 366 129 A1 offenbart. In den flachen Oberboden des Spundfasses sind Spundloch-Bohrungen eingebracht, auf die vorgefertigte Spundstutzen mit einem scheibenförmigen Schweißflansch aufgeschweißt werden. In einer speziellen Ausführungsform ist das Spundfass für eine verbesserte Überkopf-Restentleerung mit einem leicht schrägen Oberboden versehen. Hierfür sind speziell angepasste vorgefertigte Spundstutzen mit entsprechend leicht schräg verlaufendem Schweißflansch erforderlich, die in definierter Positionierung auf den schrägen Oberboden aufgeschweißt werden.

Bei einer anderen Ausführungsform des vorgefertigten Spundstutzens weist dieser im oberen Bereich einen flachen Spundkragen auf, an den sich nach unten hin eine zylinderförmige Verlängerung anschließt. Die zylinderförmige Verlängerung ist in eine Spundloch-Bohrung eingesteckt und mit dem Oberboden des Spundfasses verschweißt.

Aus der Druckschrift EP 0 515 390 B1 ist ein blasgeformtes Spundfass aus thermoplastischem Kunststoff bekannt, bei dem ein im Spritzgussverfahren vorgefertigter Spundstutzen in den Oberboden des Fasskörpers eingeschweißt ist. Dabei weist der Spundstutzen ein Rohrstück mit Innengewinde auf, das um ein Stück in den Fasskörper hineinragt. Diese Konstruktion wurde gewählt, weil das Spundgehäuse sehr flach ausgebildet ist und der obere Rand des Spundstutzens mit eingeschraubtem Spundstopfen nicht den Oberboden überragen, sondern bündig mit diesem abschließen soll. Damit eine ausreichende Anzahl von Gewindegängen für einen sicheren Sitz des eingeschraubten Spundstopfens vorhanden ist, ist das Spundstutzen-Rohrstück hier um ein Stück in das Fassinnere hinein verlagert. Um dennoch eine gute Restentleerung zu ermöglichen, ist das Spundstutzen-Rohrstück auf der nach außen zum Handhabungsring weisenden Seite mit einer Aussparung oder Durchbrechung versehen, so dass die letzten Tropfen an Restflüssigkeit aus dem Fassinneren abfließen können. Das Einschweißen des Spundstutzen-Rohrstücks wurde durch Auftragsschweißen unter Hinzufügen von aufgeschmolzenem Kunststoffmaterial realisiert. Mangels entsprechender Schweißflächen kann das Spundstutzen-Rohrstück nicht nach dem Spiegelschweißverfahren eingeschweißt werden.

In der Veröffentlichung WO 2018/054 527 A1 scheint in den Figurenzeichnungen ein ganzer Spundmuldenbereich samt Spundstutzen in den Oberboden eines Fasses mit Handhabungsring eingeschweißt zu sein, wobei in der Beschreibung dazu jedoch überhaupt nichts erwähnt ist, da der zugrundeliegende Erfindungsgedanken sich konkret auf das Einsetzen eines dünnwandigen Inliners bezieht.

Aus dem Stand der Technik ist die Anwendung des Spiegelschweißverfahrens bei Kunststoff-Behältern aus zahlreichen Vorveröffentlichungen bekannt, so z. B. aus der EP 0 721 892 A1. Darin ist beschrieben, dass für ein Spundfass der Fassoberboden mitsamt Trage-und Transportring, Spundstutzen und Aufsatzelementen im Spritzgussverfahren vorgefertigt und dann auf einen blasgeformten Fasskörperrohling aufgeschweißt wird. In anderer Ausführungsform kann ein derartiges Kunststoff-Fass natürlich auch aus einem im Spritzgussverfahren vorgefertigten Oberboden und vorgefertigten Unterboden mit einem extrudierten zylindrischen Fasskörperrohling aus drei Teilen zusammengeschweißt werden.

### Aufgabe:

Der vorliegenden Erfindung liegt die Aufgabe zugrunde, die zuvor aufgezeigten Nachteile des Standes der Technik zu beheben und eine Möglichkeit zum optimalen Einschweißen - vorzugsweise nach dem Spiegelschweißverfahren - von separat im Spritzgussverfahren vorgefertigten Spundstutzen bzw. Spundstutzenteilen mit Innengewinde auf im Blasformverfahren hergestellte Kunststoffbehälter wie Fässer, Kanister und Innenbehälter für Palettencontainer derart vorzuschlagen, dass bei Verwendung von blasgeformten Kunststoffbehältern an vorhandenen Abfüll- und Abpumpanlagen behälterseitig bedingte Störungen nicht mehr auftreten bzw. weitestgehend minimiert werden können.

### Lösung:

Diese Aufgabe wird mit den speziellen Merkmalen des Patentanspruchs 1 gelöst. Die Merkmale in den Unteransprüchen beschreiben weitere vorteilhafte Ausgestaltungsmöglichkeiten des erfindungsgemäßen blasgeformten Behälters mit aufgeschweißten, im Spritzgussverfahren vorgefertigten Spundstutzenteilen. Die vorgeschlagene technische Lehre vermittelt auf an sich einfache Weise, wie die Nachteile von bekannten blasgeformten Kunststoff-Behältern überwunden werden können; dies wird in konstruktiver Weise durch folgende Merkmale erreicht:
- behälterseitig ist eine ringförmige Schweißfläche mit einer kreisförmigen Innenkante und einer kreisförmigen Außenkante vorgesehen,
- das im Spritzgussverfahren vorgefertigte Spundstutzenteil ist als massiver Gewindeschweißkopf mit Innengewinde ausgebildet und
- weist eine korrespondierende ringförmige Schweißfläche mit einer kreisförmigen Innenkante und einer kreisförmigen Außenkante auf, und
- die beiden ringförmigen Schweißflächen sind stoffschlüssig fest und unlösbar miteinander verbunden, und
- bei normaler aufrechter Positionierung des Behälters die Außenkanten der beiden aufeinanderliegenden Schweißflächen - in Horizontalebene betrachtet - höher angeordnet sind als die Innenkanten der beiden Schweißflächen.

Durch die voneinander beabstandeten Innen- und Außenkanten der Schweißflächen wird - in Vertikalrichtung betrachtet - eine flächige Erstreckung der ringförmigen Schweißflächen bewirkt. Die Breite der Schweißflächen beträgt in Radialrichtung bzw. schräg verlaufend betrachtet zwischen 3 mm und 15 mm, vorzugsweise ca. 5 mm, so dass hier insbesondere das Spiegelschweißverfahren besonders geeignet ist. Je flacher die Schweißflächen behälterseitig und am Gewindeschweißkopf ausgerichtet sind, desto breiter überdecken sie sich. Je steiler die Schweißflächen behälterseitig und am Gewindeschweißkopf ausgerichtet sind, desto weniger überdecken sie sich, bis letztendlich bei vertikal ausgerichteten Schweißflächen keine Überdeckung mehr gegeben ist und eine Verschweißung nach dem Spiegelschweißverfahren ist nicht durchführbar. Bei derartig vertikal ausgerichteten Schweißflächen wird ein Verschweißen von Spundstutzen und Behälteroberboden üblicherweise durch Auftragsschweißung unter Hinzufügen von aufgeschmolzenem Kunststoffmaterial realisiert.

Der im Spritzgussverfahren vorgefertigte massive Gewindeschweißkopf verhindert eine mögliche Ovalisierung der Spundöffnung und des Dichtungssitzes für den Spundstopfen und weist präzise ausgebildete Gewindegänge mit scharfen Gewindeflanken auf. Der massive Gewindeschweißkopf weist im Bereich seines größten Durchmessers eine Verdickung bzw. Anhäufung von Kunststoffmaterial mit nahezu doppelt so dicker Wandstärke von ca. 6 - 8 mm im Vergleich zur Wandstärke des Behälteroberbodens mit einer Wandstärke von ca. 3 - 4 mm auf.

Grundsätzlich könnte die stoffschlüssige Verbindung des Gewindeschweißkopfs mit dem Oberboden des Kunststoff-Behälters auf verschiedene Art und Weise, z. B. durch Kleben, Vernetzen o. ä. bewirkt werden. Vorzugsweise soll die stoffschlüssige Verbindung bei der vorliegenden Erfindung nach dem bekannten, hierfür besonders geeigneten Spiegelschweißverfahren erfolgen, wobei die beiden Schweißflächen durch Anlegen von entsprechend geformten aufgeheizten Schweißelementen partiell angeschmolzen und nach Entnahme der Schweißelemente fest gegeneinandergedrückt und unlösbar miteinander verbunden bzw. verschweißt werden.

In Ausgestaltung der Erfindung ist vorgesehen, dass die behälterseitige ringförmige Schweißfläche und die korrespondierende ringförmige Schweißfläche am massiven Gewindeschweißkopf im Wesentlichen dreidimensional schräg verlaufend ausgebildet sind. Dabei weist die von der ringförmigen Schweißfläche umschlossene Öffnung im Behälteroberboden in Querschnittsbetrachtung eine nahezu trapezförmige Form auf. Mit anderen Worten stellt die von der behälterseitigen ringförmigen Schweißfläche umschlossene Öffnung im Behälteroberboden bei aufrechter Positionierung des Behälters mit den Öffnungen nach oben eine über Kopf stehende Kegelabschnittsform mit Basis nach oben und Spitze nach unten dar.

Erfindungsgemäß sind bei normaler aufrechter Positionierung des Behälters die Außenkanten der beiden aufeinanderliegenden Schweißflächen höher angeordnet als die Innenkanten der beiden Schweißflächen. Durch diese konstruktive Ausgestaltung kann der massive Gewindeschweißkopf beim Einschweißen besser zentriert und vertikal ausgerichtet werden.

In einer abgewandelten Ausführung der Erfindung ist die behälterseitige ringförmige Schweißfläche im Wesentlichen konkav und die ringförmige Schweißfläche am Gewindeschweißkopf im Wesentlichen konvex ausgebildet ist. Die vorgenommene Anpassung der beiden dreidimensionalen ringförmigen Schweißflächen aufeinander ermöglicht eine bessere Zentrierung und Ausrichtung des Gewindeschweißkopfs beim Einschweißen in den Behälteroberboden.

In bevorzugter Abwandlung der Erfindung ist vorgesehen, dass die Außenseite des Gewindeschweißkopfs wenigstens im Bereich seiner ringförmigen Schweißfläche kalottenförmig ausgebildet ist und die behälterseitige ringförmige Schweißfläche eine korrespondierende negativ kalottenförmige Form aufweist. Durch die kalottenförmige Ausbildung der ringförmigen Schweißflächen der beiden zu verschweißenden Teile lassen sich Unebenheiten und Schrägstellungen im Bodenbereich des Spundgehäuses oder bei leicht bombiertem Behälteroberboden am besten kompensieren, so dass eine präzise vertikale Ausrichtung des eingeschweißten Gewindeschweißkopfs erzielt wird, wodurch bisherige Probleme und dadurch bedingte Störungen bei der Verwendung von blasgeformten Kunststoffbehältern an vorhandenen Abfüll- und Abpumpanlagen nicht mehr auftreten.

Bei einer ganz besonders bevorzugten konstruktiven Ausgestaltung ist die Außenseite des Gewindeschweißkopfs nahezu insgesamt kalottenförmig ausgebildet. Der Gewindeschweißkopf weist die Form einer Kugelschicht, auch Kugelscheibe genannt, auf und ist ein Teil einer Vollkugel, der von zwei parallelen Ebenen ausgeschnitten wird. Der gekrümmte Flächenteil wird Kugelzone genannt und stellt die kalottenförmige Außenseite des Gewindeschweißkopfs dar.

Die spezielle Form einer Kugelkalotte ermöglicht optimale Einschweißkonditionen und eine massive Ausgestaltung des Gewindeschweißkopfs in dekorativem Design. Bei blasgeformten Spundfässern ist das Kunststoffmaterial üblicherweise blau eingefärbt. Die separate Fertigung der Gewindeschweißköpfe im Spritzgussverfahren ermöglicht die Wahl einer anderen Farbe für die aufgeschweißten Gewindeschweißköpfe. Als Hinweis auf bestimmte Füllgüter können die vorgefertigten Gewindeschweißköpfe z. B. die Farbe Rot für Gefahrgutbehälter, die Farbe Grün für Kunststoff-Behälter mit umweltfreundlichem Füllgut oder die Farbe Gelb für lebensmittelfreundliche Kunststoff-Behälter aufweisen.

Die kompakte kugelkalottenförmige Ausgestaltung des massiven Gewindeschweißkopfs ermöglicht es in besonderer Weise, dass die behälterseitige ringförmige Schweißfläche nahezu ohne Stutzen direkt in der Spundöffnung im Oberboden des Behälters an einem angeformten Wulstring ausgebildet ist. Dadurch kann z. B. die Einsenkung eines Spundgehäuses bzw. einer Spundmulde im Oberboden des Kunststoff-Behälters besonders flach gehalten werden, wodurch sich eine verbesserte Restentleerung des Kunststoff-Behälters bewerkstelligen lässt. Die direkte Einschweißung eines Gewindeschweißkopfs ohne Stutzen nahezu direkt in eine Spundöffnung im Oberboden eines Behälters ist insbesondere für 1000 Liter Kunststoff-Innenbehälter von Palettencontainern geeignet, die kein separates Spundgehäuse für die Spundöffnung, sondern nur einen tiefergelegten Mittelbereich des Innenbehälter-Oberbodens aufweisen.

Vorzugsweise bei Spundfässern und Kanistern ist in konstruktiver Ausgestaltung der Erfindung die behälterseitige ringförmige Schweißfläche am oberen Rand eines kurzen, die Spundöffnung im Oberboden des Behälters umschließenden Schweißspundstutzens ausgebildet. Zweckmäßigerweise sind die Schweißspundstutzen für die gängigen ¾-Zoll, 2-Zoll- und 3-Zoll-Spundverschlüsse unabhängig von der Behältergröße jeweils als Einheits-Schweißspundstutzen mit jeweils identischer Kontur ausgebildet. Identische Kontur bedeutet hierbei gleiche Abmessungen in Länge und Durchmesser.

Dann können die Fasskörper bzw. Fässer mit Handhabungsring ohne häufiges Auswechseln der Blasdorne in der Blasform für die verschiedenen Spundverschlüsse sozusagen auch als Universal-Fasskörper mit wanddickenreduzierten Einheits-Schweißspundstutzen hergestellt werden. Durch die Reduzierung von Umrüstzeiten und die Verkürzung von Abkühlzeiten wird eine signifikante Erhöhung der Stückzahlen erreicht.

In die Einheits-Schweißspundstutzen können dann frei wählbar vorgefertigte Standard-Gewindeschweißköpfe in allen gängigen Gewindeformen eingeschweißt werden.

Wenn Fässer mit Handhabungsring im europäischen Raum verwendet werden, ist der eine Spund üblicherweise als 2-Zoll Befüll- und Entleerungs-Spund und der andere Spund als ¾-Zoll Be- und Entlüftungsspund jeweils mit Grobgewinde ausgeführt, während Fässer mit Handhabungsring, die vornehmlich im amerikanischen oder asiatischen Markt gebräuchlich sind, mit zwei 2-Zoll Spunden ausgestattet sind, wobei dann der eine Spund mit einem Grobgewinde und der andere Spund mit einem Feingewinde ausgestattet ist.

Mit der vorliegenden Erfindung können zahlreiche Vorteile erreicht werden:
- es ist möglich in die Universal-Fasskörper einen dünnwandigen Inliner einzusetzen und den dünnwandigen Inliner-Stutzen im zylindrischen Bereich des Einheits-Schweißspundstutzen radial einzuschweißen und erst danach den Gewindeschweißkopf mit beliebigem Gewinde auf den Einheits-Schweiß-spundstutzen aufzusetzen bzw. aufzuschweißen;
- die Fertigung der Universal-Fasskörper mit den beiden Einheits-Schweißspund-stutzen kann blasformtechnisch z. B. durch Verkürzung der Zykluszeiten optimiert werden, da das intensive Kühlen der üblichen Gewindeflansche entfällt und auch die Ausdrehzeit der Gewinde-Blasdorne wegfällt;
- die Wanddicke des schlauchförmigen Vorformlings kann besser gesteuert werden, da das Kunststoff-Material zur Ausformung der Gewinde nicht mehr benötigt wird;
- ein Werkzeugwechsel (andere Schalen und Blasdorne) beim Wechsel von einer auf eine andere Spundstutzen-Geometrie (Grobgewinde - Feingewinde) entfällt;
- die Toleranzen der Gewindeflansche können verbessert bzw. minimiert werden, was insbesondere bei dem amerikanischen Feingewinde (NPS 2-Zoll) wichtig ist;
- die Ovalität der Gewindeöffnung in den Gewindeschweißköpfen wird eliminiert;
- eine eventuelle Neigung der Einheits-Schweißspundstutzen bezogen auf den Behälteroberboden kann durch die Kalottengeometrie der Gewindeschweißköpfe beim Aufschweißen ausgeglichen werden;
- die Toleranzen der Außengeometrie für die aufzusetzenden Siegelkappen können deutlich enger eingestellt werden;
- farblich individuell gestaltete Gewindeschweißköpfe ermöglichen eine optische Unterscheidung von üblichen standard-blauen Fässern mit Handhabungsring;
- als alternative einfachste Schweißgeometrie können auch ebene Schweißflächen realisiert sein.

Die Erfindung wird nachfolgend anhand von in den Zeichnungen schematisch dargestellten Ausführungsbeispielen näher erläutert und beschrieben. Es zeigen:
- Figur 1: in perspektivischer Ansicht einen erfindungsgemäßen blasgeformten Kunststoff-Behälter in Form eines Spundfasses mit eingeschweißten Gewindeschweißflanschen,
- Figur 2: einen erfindungsgemäßen Gewindeschweißkopf in Querschnittsansicht,
- Figur 3: eine Teilquerschnittsansicht durch einen eingeschweißten Gewindeschweißflansch,
- Figur 4: eine andere Teilquerschnittsansicht durch einen eingeschweißten Gewindeschweißkopf,
- Figur 5: eine weitere Teilquerschnittsansicht durch einen eingeschweißten Gewindeschweißkopf,
- Figur 6: in Teilquerschnittsansicht eine andere Ausführungsform eines eingeschweißten Gewindeschweißkopfs

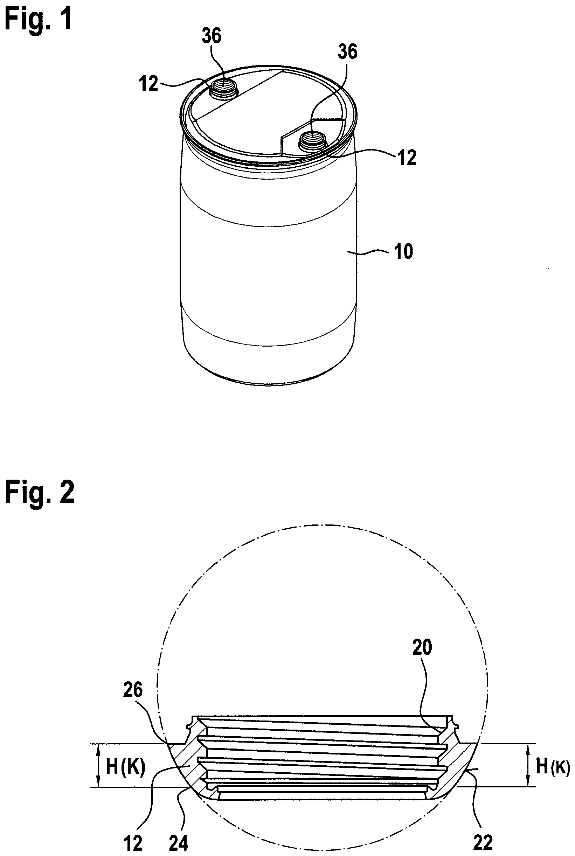

In **Figur 1** ist als bevorzugtes Ausführungsbeispiel eines blasgeformtem Kunststoff-Behälters ein Spundfass aus thermoplastischem Kunststoff dargestellt und mit der Bezugsziffer 10 bezeichnet. Spundfässer mit oberem Handhabungsring gibt es in verschiedenen Fassgrößen mit einem Füllvolumen von 30 Liter bis 300 Liter. Am gebräuchlichsten sind 220 Liter Spundfässer mit zwei Spundverschlüssen im Fassoberboden. Erfindungsgemäß sind die Spundverschlüsse jeweils mit einem im Spritzgussverfahren vorgefertigten eingeschweißten Gewindeschweißkopf 12 versehen, in den zum gas- und flüssigkeitsdichten Verschluss der Spundöffnung 28 die üblichen Spundstopfen eingeschraubt werden.

Eine Gewindeschweißkopfausführung gemäß der vorliegenden Erfindung ist in **Figur 2** dargestellt. Die erfindungsgemäßen Gewindeschweißköpfe 12 können in verschiedenen Größen ausgeführt sein. Bevorzugte Größen sind ¾-Zoll-, 2-Zoll-, 3-Zoll-Gewindeschweißköpfe. Die erfindungsgemäßen Gewindeschweißköpfe 12 können weiterhin mit verschiedenen Gewindeversionen versehen sein, und zwar entweder mit einem Grobgewinde und unterhalb des Gewindes angeordnetem Dichtungssitz oder mit einem Feingewinde und oberhalb des Gewindes angeordnetem Dichtungssitz. 2-Zoll-Gewindeschweißköpfe können zudem mit einem üblichen BCS 70 x 6 -Gewinde ausgebildet sein.

Das im Spritzgussverfahren vorgefertigte obere Spundstutzenteil ist als massiver Gewindeschweißkopf 12 wie ein Kugelkalotten-Ringelement mit einer zentralen Bohrung zur Aufnahme eines Innengewindes und einem die Bohrung umschließenden Wandungsteil mit durch Materialanhäufung verdickter Wandstärke ausgebildet.

Der massive Gewindeschweißkopf 12 mit Innengewinde 20 weist umfangsseitig eine ringförmige Schweißfläche 22 mit einer kreisförmigen Innenkante 24 und einer kreisförmigen Außenkante 26 auf. Die Außenseite des Gewindeschweißkopfs 12 kann umfangsseitig wenigstens im Bereich seiner ringförmigen Schweißfläche 22 kalottenförmig ausgebildet sein. In bevorzugter Ausführungsform ist die Außenseite des Gewindeschweißkopfs 12 nahezu insgesamt kalottenförmig ausgebildet. Die Kugelkalottenform des Gewindeschweißkopfs 12 ist durch den in Figur 2 gestrichelt eingezeichneten Kreis dargestellt und weist die Gestalt einer dreidimensionalen Kugelschicht mit gleichmäßig gekrümmter äußerer Kugelzone als kalottenförmige Außenseite des Gewindeschweißflansches auf.

Die Höhe der ringförmigen Schweißfläche 22 ist durch den Pfeil H_{(K)} definiert.

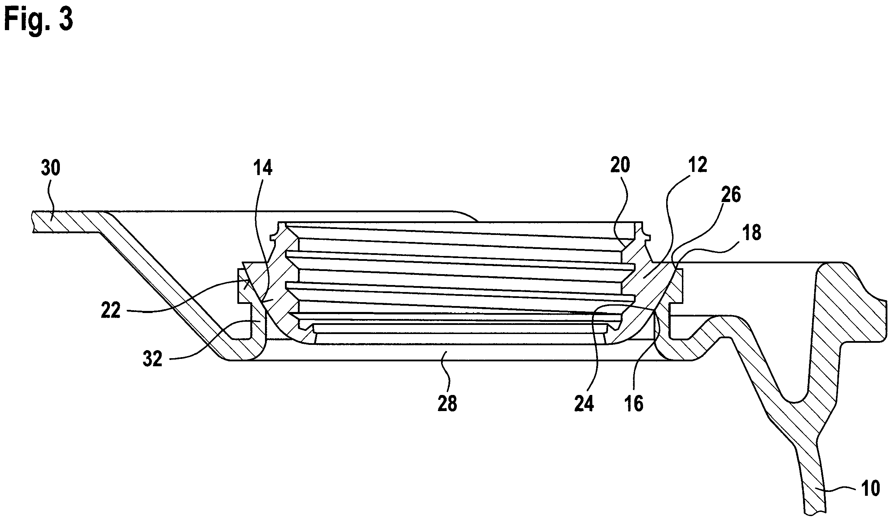

In **Figur 3** ist ein Gewindeschweißkopf 12 in eingebautem Zustand bei einem Spundfass 10 mit umlaufendem Handhabungsring dargestellt. Die in einer Spundmulde des Oberbodens 30 angeordnete Spundöffnung 28 wird von einem Schweißspundstutzen 32 umschlossen. Am oberen Rand des Schweißspundstutzens 32 ist eine ringförmige Schweißfläche 14 mit einer negativ kalottenförmigen Kontur ausgebildet, die unten eine kreisförmige Innenkante 16 und oben eine kreisförmige Außenkante 18 aufweist. Der eingeschweißte Gewindeschweißkopf 12 mit kalottenförmiger Außenseite weist entsprechend die ringförmige Schweißfläche 22 mit kreisförmiger Innenkante 24 und kreisförmiger Außenkante 26 auf. Damit sind bei normaler aufrechter Positionierung des Spundfasses 10 die Außenkanten 18, 26 der beiden aufeinanderliegenden Schweißflächen 14, 22 höher angeordnet als die Innenkanten 16, 24 der beiden Schweißflächen 14, 22. Für den Schweißvorgang wird aufgrund der vergleichsweise großen Breite der Schweißflächen, die in Radialrichtung bzw. schräg verlaufend zwischen 3 mm und 15 mm, vorzugsweise ca. 5 mm beträgt, das besonders geeignete Spiegelschweißverfahren angewendet. Nach dem Schweißvorgang sind die beiden ringförmigen Schweißflächen 14 und 22 stoffschlüssig fest und unlösbar miteinander verbunden bzw. verschweißt.

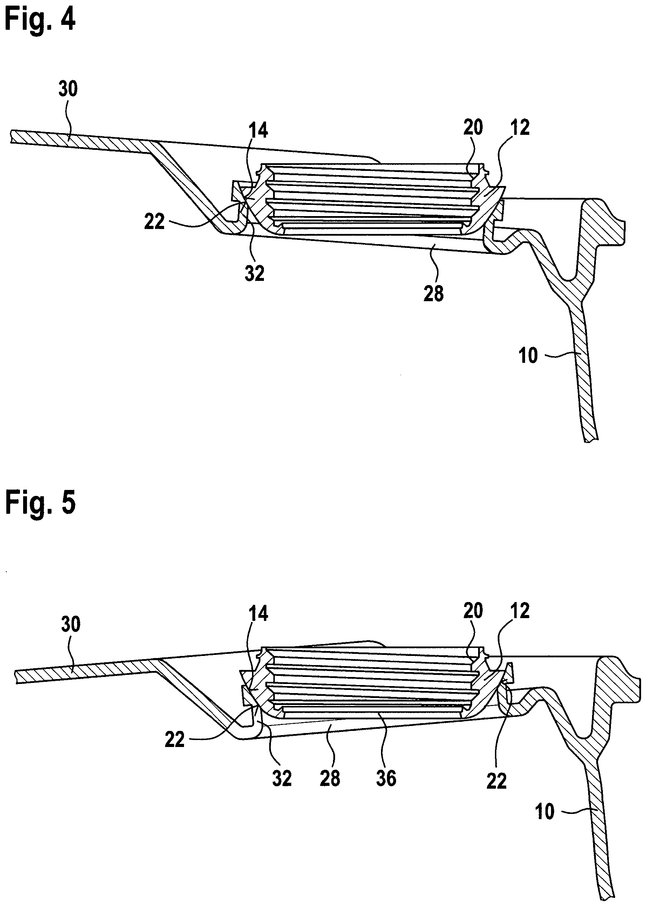

In **Figur 4** ist der obere Bereich eines Spundfasses 10 dargestellt, bei dem in zeichnerisch übertriebener Form der Oberboden 30 - z. B. durch Nachkühlung bei möglicherweise zu hohem Innendruck - stark nach oben bombiert bzw. ausgewölbt ist. Dadurch ist hier der Schweißspundstutzen 32 leicht verzogen und nach außen geneigt. Durch die Kalottenform des Schweißspundstutzens 32 kann auch bei "schiefem" Oberboden 30 das Innengewinde 20 der Spundöffnung 28 lotrecht ausgerichtet werden.

Durch die langsamere Abkühlung von Dickstellen, insbesondere entlang der Quetschnähte eines nach der Blasformgebung von aus der Blasform entnommenen Kunststoff-Hohlkörpers kann durch materialinterne Spannungen Verzug auftreten, wodurch sich der Oberboden des Hohlkörpers nach innen bzw. unten senken kann. Ein solcher Fall ist in **Figur 5** in zeichnerisch übertriebener Form dargestellt, wobei bei dem Spundfass 10 der Oberboden 30 sich nach unten gesenkt hat und der Schweißspundstutzen 32 zur Mitte des Oberbodens 30 hin geneigt ist. Durch die vertikale Ausrichtung des kalottenförmigen Gewindeschweißkopfs 12 wird die Neigung des Schweißspundstutzens 32 kompensiert, so dass das Innengewinde 20 in der Spundöffnung 28 mit einem eingeschraubten Spundstopfen präzise für den Einsatz von Schraubautomaten und Fülllanzen an automatischen Abfüllanlagen ausgerichtet ist und sich keinerlei Probleme mehr ergeben.

Im Rahmen der vorliegenden Erfindung können in einfacher Ausführungsform die behälterseitige ringförmige Schweißfläche 14 und die korrespondierende ringförmige Schweißfläche 22 am massiven Gewindeschweißkopf 12 dreidimensional schräg verlaufend ausgebildet sein. Die von der ringförmigen Schweißfläche 14 umschlossene Spundöffnung 28 im Oberboden 30 des Spundfasses 10 weist dann in Querschnittsbetrachtung eine nahezu trapezförmige Form auf. In abgewandelter Form können auch die behälterseitige ringförmige Schweißfläche 14 konkav und die ringförmige Schweißfläche 22 am Gewindeschweißkopf 12 konvex geformt sein.

Bei einer besonders bevorzugten Ausführungsform ist die behälterseitige ringförmige Schweißfläche 14 am oberen, etwas aufgeweiteten Rand des die Behälteröffnung 28 im Oberboden 30 des Behälters 10 umschließenden verkürzt ausgebildeten Schweißspundstutzens 32 angeordnet. Dabei ist der Schweißspundstutzen 32 für die gängigen ¾-Zoll-, 2-Zoll- und 3-Zoll-Spundverschlüsse unabhängig von der Behältergröße jeweils als Einheits-Schweißspundstutzen mit gleichem Durchmesser von z. B. 65 mm ausgebildet, auf den ein entsprechend angepasster Einheits-Gewindeschweißkopf 12 mit ebenfalls immer gleichem Durchmesser von z. B. 70 mm aufgeschweißt ist, dessen Öffnung 36 mit Innengewinde für den Einsatz der gängigen %-Zoll, 2-Zoll- und 3-Zoll-Spundverschlüsse frei wählbar ist.

Ein häufig verwendeter Gewindeschweißkopf ist für einen Spundverschluss bzw. Spundstopfen BSC 70 x 6 für Stahlsiegelkappe ausgelegt.

Es können so z. B. Spundfässer in den Behältergrößen 60 I, 120 I, 220 I oder 250 I mit verkürzt ausgebildeten Einheits-Schweißspundstutzen 32 immer mit gleichem Durchmesser von 65 mm hergestellt werden, ohne dass der Formeneinsatz in der Blasform für verschiedene Spundöffnungsdurchmesser bzw. für verschiedene Spundstopfen-Größen (¾-Zoll, 2-Zoll, 3-Zoll) ausgewechselt werden muss. Dadurch können erheblich höhere Stückzahlen von Fässern hergestellt werden, auch weil für die verkürzt ausgebildeten Einheits-Schweißspundstutzen 32 kürzere Abkühlzeiten bzw. Cykluszeiten benötigt werden. Je nach Kundenwunsch können dann vorgefertigte Einheits-Gewindeschweißköpfe mit immer gleichem Durchmesser in frei wählbarer Farbe mit frei wählbarer Spundstopfen-Größe und Gewindeart (Grobgewinde, Feingewinde) und Dichtungssitz (oberhalb oder unterhalb des Gewindes) auf die verkürzt ausgebildeten Einheits-Schweißspundstutzen aufgeschweißt werden.

Gewindeschweißköpfe können für folgende Spundverschlüsse vorgefertigt werden : BCS 70 x 6, 2" Butress, 2" NPS, BCS 56 x 4, BCS 38 x 6 und andere. Dabei bleibt der Außendurchmesser der Gewindeschweißköpfe mit ca. 65 bis 70 mm immer gleich. Lediglich der Durchmesser der zentralen Gewindeöffnung ist für die verschiedenen Spundverschlüsse variabel, wobei dann die Wanddicke bei den kleineren Spundöffnungen zunimmt.

Durch die Blasformfertigung von Spundfässern mit verkürzt ausgebildeten Einheits-Schweißspundstutzen besteht weiterhin die Möglichkeit einen dünnwandigen Inliner in die vorgefertigten Spundfässer einzusetzen und die dünnwandigen Inlinerstutzen innerhalb der Einheits-Schweißspundstutzen anzuschweißen, bevor der gewünschte Gewindeschweißkopf z. B. in der Farbe Gelb auf den Einheits-Schweißspundstutzen aufgeschweißt wird. Die Farbe Gelb des Gewindeschweißkopfs kann z. B. ein Spundfass mit eingesetztem Inliner kennzeichnen, da dies ohne Öffnen der Spundverschlüsse sonst von außen nicht erkennbar ist.

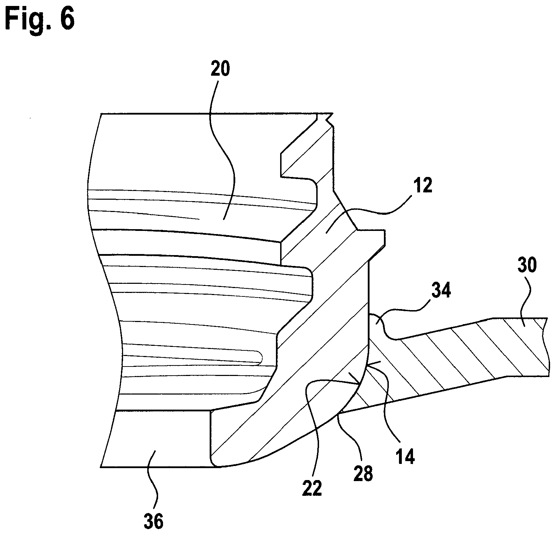

In **Figur 6** ist weiterhin eine Ausführungsform dargestellt, bei der die behälterseitige ringförmige Schweißfläche 14 nahezu ohne Stutzen direkt in der Spundöffnung 28 im Oberboden 30 des Spundfasses 10 ausgebildet ist. Dabei kann zusätzlich am oberen Rand der Spundöffnung 28 auf dem Oberboden 30 ein umlaufender Wulstrand 34 angeformt sein. Dadurch kann - falls gewünscht - die Breite der ringförmigen Schweißfläche 14 erhöht werden. Diese Ausführungsform ist besonders für kleinere Behälter wie Kanister oder kleine Spundfässer vorgesehen, die nur eine flache oder gar keine tiefer eingesenkte Spundmulde zum Schutz eines Spundstutzens aufweisen.

### Fazit:

Die vorliegende Erfindung vermittelt die Lehre, wie die Vorteile der Blasformtechnik - hohe Stückzahlen zu vergleichsweise geringen Herstellungskosten - auf einfache Weise mit den Vorteilen der Spritzgusstechnik - präzise geometrische Abmessungen an behälterseitigen Dichtungssitzen und Schraubgewinden - kombiniert werden können.

### Bezugsziffernliste

- **10**: Kunststoff-Behälter (z. B. Spundfass)
- **12**: Gewindeschweißkopf (10)
- **14**: ringförmige Schweißfläche behälterseitig (10)
- **16**: kreisförmige Innenkante behälterseitig (14)
- **18**: kreisförmige Außenkante behälterseitig (14)
- **20**: Innengewinde (12)
- **22**: ringförmige Schweißfläche flanschseitig (12)
- **24**: kreisförmige Innenkante flanschseitig (22)
- **26**: kreisförmige Außenkante flanschseitig (22)
- **28**: Behälteröffnung (30)
- **30**: Oberboden (10)
- **32**: Schweißspundstutzen (30)
- **34**: umlaufender Wulstrand (30)
- **36**: Öffnung Gewindeschweißkopf (12)
- **H_{(K)}**: Höhe der Schweißfläche (22)

## Patentansprüche

1. Behälter (10) aus thermoplastischem Kunststoff zur Lagerung und zum Transport von flüssigen oder fließfähigen Füllgütern, der im Blasformverfahren hergestellt und an einer Behälteröffnung (28) im Behälteroberboden (30) mit einem aufgeschweißten, im Spritzgussverfahren vorgefertigten Spundstutzenteil mit am oberen Ende versehenen Innengewinde zum Verschließen der Behälteröffnung (28) versehen ist,
wobei,
- behälterseitig ist ein im Blasformverfahren ausgebildeter, die Behälteröffnung (28) umschließender verkürzter Schweißspundstutzen (32) ausgeformt, der mit einer schräg nach oben weisenden ringförmigen Schweißfläche (14) mit einer kreisförmigen Innenkante (16) und einer kreisförmigen Außenkante (18) versehen ist,
- das im Spritzgussverfahren vorgefertigte Spundstutzenteil ist durch Materialanhäufung als massiver Gewindeschweißkopf (12) mit Innengewinde (20) ausgebildet und
- weist eine korrespondierende schräg nach unten weisende ringförmige Schweißfläche (22) mit einer kreisförmigen Innenkante (24) und einer kreisförmigen Außenkante (26) auf,
- die beiden ringförmigen Schweißflächen (14, 22) sind stoffschlüssig fest und unlösbar miteinander verbunden
und
bei normaler aufrechter Positionierung des Behälters sind (10) die Außenkanten (18, 26) der beiden aufeinanderliegenden Schweißflächen (14, 22) - in Horizontalebene betrachtet - höher angeordnet als die Innenkanten (16, 24) der beiden Schweißflächen (14, 22).

2. Behälter (10) nach Anspruch 1,
**dadurch gekennzeichnet, dass**
die behälterseitige ringförmige Schweißfläche (14) konkav und die außenseitig am massiven Gewindeschweißkopf (12) angeordnete ringförmige Schweißfläche (22) konvex ausgebildet ist.

3. Behälter (10) nach Anspruch 1 oder 2,
**dadurch gekennzeichnet, dass**
die Außenseite des Gewindeschweißkopfs (12) - in Horizontalebene betrachtet - wenigstens im Bereich seiner ringförmigen Schweißfläche (22) kalottenförmig ausgebildet ist und die behälterseitige ringförmige Schweißfläche (14) eine korrespondierende negativ kalottenförmige Kontur aufweist.

4. Behälter (10) nach Anspruch 1, 2 oder 3,
**dadurch gekennzeichnet, dass**
die Außenseite des Gewindeschweißkopfs (12) nahezu insgesamt kalottenförmig ausgebildet ist.

5. Behälter (10) nach Anspruch 1, 2, 3 oder 4,
**dadurch gekennzeichnet, dass**
die behälterseitige ringförmige Schweißfläche (14) an einem als verkürzter Schweißspundstutzen (32) ausgebildeten umlaufenden Wulstrand (34) direkt an der Behälteröffnung (28) im Oberboden (30) des Behälters angeordnet ist.

6. Behälter (10) nach Anspruch 1, 2, 3, 4 oder 5,
**dadurch gekennzeichnet, dass**
die behälterseitige ringförmige Schweißfläche (14) am oberen Rand des die Behälteröffnung (28) im Oberboden (30) des Behälters umschließenden verkürzt ausgebildeten Schweißspundstutzens (32) angeordnet ist, wobei der Schweißspundstutzen (32) unabhängig von der Behältergröße jeweils als Einheits-Schweißspundstutzen mit gleichem Durchmesser für die gängigen ¾-Zoll, 2-Zoll- und 3-Zoll-Spundverschlüsse ausgebildet ist, auf den ein entsprechend angepasster Einheits-Gewindeschweißkopf (12) mit einem Außendurchmesser zwischen 65 mm bis 70 mm aufgeschweißt ist, dessen Öffnung (36) mit einem Innengewinde für den Einsatz eines ¾-Zoll, 2-Zoll- oder 3-Zoll-Spundverschlusses ausgebildet ist.

7. Behälter (10) nach Anspruch 1, 2, 3,4, 5 oder 6,
**dadurch gekennzeichnet, dass**
der im Spritzgussverfahren vorgefertigte massive Gewindeschweißkopf (12) eine andere Farbe, z. B. rot als Hinweis auf ein eingefülltes Gefahrgut, als der Behälter (10) aufweist.

## Claims

1. A container (10) made of thermoplastic material for the storage and transport of liquid or free-flowing contents, which container is produced in a blow molding process and, at a container opening (28) in the top (30) of the container, is provided with a welded-on bung connector part prefabricated in an injection molding process and having internal threads for closing the container opening (28) which are provided at the upper end,
wherein
- on the container side a shortened welded bung connector (32) is formed which is formed in a blow molding process, encloses the container opening (28) and is provided with an annular welding surface (14) facing obliquely upward with a circular inner edge (16) and a circular outer edge (18),
- the bung connector part, prefabricated in an injection molding process, is formed as a solid threaded welding head (12) with an internal thread (20) by material accumulation and
- has a corresponding annular welding surface (22) facing obliquely downward with a circular inner edge (24) and a circular outer edge (26),
- the two annular welding surfaces (14, 22) are materially bonded to one another in a fixed and non-detachable manner
and
with normal upright positioning of the container (10), the outer edges (18, 26) of the two welding surfaces (14, 22) lying one on top of the other - as viewed in the horizontal plane - are arranged higher than the inner edges (16, 24) of the two welding surfaces (14, 22).

2. The container (10) as claimed in claim 1,
**characterized in that**
the annular welding surface (14) on the container side is formed as concave and the annular welding surface (22) arranged on the outside of the solid threaded welding head (12) is formed as convex.

3. The container (10) as claimed in claim 1 or 2,
**characterized in that**
the outer side of the threaded welding head (12) - as viewed in the horizontal plane - has a dome-like form at least in the region of its annular welding surface (22) and the annular welding surface (14) on the container side has a corresponding negative dome-like contour.

4. The container (10) as claimed in claim 1, 2 or 3,
**characterized in that**
the outer side of the threaded welding head (12) has an almost entirely dome-like form.

5. The container (10) as claimed in claim 1, 2, 3 or 4,
**characterized in that**
the annular welding surface (14) on the container side is arranged on a circumferential beaded edge (34) which is in the form of a shortened welded bung connector (32) directly on the container opening (28) in the top (30) of the container.

6. The container (10) as claimed in claim 1, 2, 3, 4 or 5,
**characterized in that**
the annular welding surface (14) on the container side is arranged on the upper edge of the welded bung connector (32) which is of shortened form and encloses the container opening (28) in the top (30) of the container, wherein the welded bung connector (32) is formed respectively as a standard welded bung connector with the same diameter for the conventional ¾-inch, 2-inch and 3-inch bung closures, regardless of the container size, onto which welded bung connector a correspondingly adapted standard threaded welding head (12) with an external diameter of between 65 mm and 70 mm is welded, the opening (36) of which, which has an internal thread, is formed for the use of a %-inch, 2-inch or 3-inch bung closure.

7. The container (10) as claimed in claim 1, 2, 3, 4, 5 or 6,
**characterized in that**
the solid threaded welding head (12) prefabricated in an injection molding process has a color, e.g. red as an indication of hazardous goods contents, which is different than that of the container (10).

## Revendications

1. Contenant (10) en matière plastique thermoplastique pour le stockage et le transport de produits remplis liquides ou fluides, qui est fabriqué par le procédé de moulage par soufflage et est pourvu, au niveau d'une ouverture de contenant (28) dans le plafond de contenant (30), d'une partie de raccord de bonde soudée, préfabriquée par le procédé de moulage par injection, pourvue, à l'extrémité supérieure, d'un filetage intérieur pour la fermeture de l'ouverture de contenant (28),
- un raccord de bonde de soudage raccourci (32), formé par le procédé de moulage par soufflage, entourant l'ouverture de contenant (28), étant formé côté contenant, qui est pourvu d'une surface de soudage annulaire (14), orientée obliquement vers le haut, comprenant un bord intérieur circulaire (16) et un bord extérieur circulaire (18),
- la partie de raccord de bonde préfabriquée par le procédé de moulage par injection étant formée par accumulation de matière sous la forme d'une tête de soudage filetée massive (12) comprenant un filetage intérieur (20) et
- présentant une surface de soudage annulaire correspondante (22) orientée obliquement vers le bas, comprenant un bord intérieur circulaire (24) et un bord extérieur circulaire (26),
- les deux surfaces de soudage annulaires (14, 22) étant reliées entre elles de manière fixe et indétachable par accouplement de matière,
et
dans le cas d'un positionnement vertical normal du contenant (10), les bords extérieurs (18, 26) des deux surfaces de soudage (14, 22) superposées étant, tels que vus dans le plan horizontal, agencés plus haut que les bords intérieurs (16, 24) des deux surfaces de soudage (14, 22).

2. Contenant (10) selon la revendication 1,
**caractérisé en ce que**
la surface de soudage annulaire (14) côté contenant est configurée sous forme concave et la surface de soudage annulaire (22) agencée côté extérieur sur la tête de soudage filetée massive (12) est configurée sous forme convexe.

3. Contenant (10) selon la revendication 1 ou 2,
**caractérisé en ce que**
le côté extérieur de la tête de soudage filetée (12), tel que vu dans le plan horizontal, est configuré sous forme de calotte au moins dans la zone de sa surface de soudage annulaire (22) et la surface de soudage annulaire (14) côté contenant présente un contour correspondant en forme de calotte négative.

4. Contenant (10) selon la revendication 1, 2 ou 3,
**caractérisé en ce que**
le côté extérieur de la tête de soudage filetée (12) est presque entièrement configuré sous forme de calotte.

5. Contenant (10) selon la revendication 1, 2, 3 ou 4,
**caractérisé en ce que**
la surface de soudage annulaire (14) côté contenant est agencée directement sur l'ouverture de contenant (28) dans le plafond (30) du contenant, sur un bourrelet périphérique (34) configuré en tant que raccord de bonde de soudage raccourci (32).

6. Contenant (10) selon la revendication 1, 2, 3, 4 ou 5,
**caractérisé en ce que**
la surface de soudage annulaire (14) côté contenant est agencée sur le bord supérieur du raccord de bonde de soudage (32) configuré sous forme raccourcie, entourant l'ouverture de contenant (28) dans le plafond (30) du contenant, le raccord de bonde de soudage (32) étant configuré, indépendamment de la taille du contenant, respectivement sous la forme d'un raccord de bonde de soudage unitaire de même diamètre pour les fermetures à bonde usuelles de % pouce, 2 pouces et 3 pouces, sur lequel une tête de soudage filetée unitaire (12), adaptée en conséquence, ayant un diamètre extérieur compris entre 65 mm et 70 mm, est soudée, dont l'ouverture (36) est configurée avec un filetage intérieur pour l'insertion d'une fermeture à bonde de % pouce, 2 pouces ou 3 pouces.

7. Contenant (10) selon la revendication 1, 2, 3, 4, 5 ou 6,
**caractérisé en ce que**
la tête de soudage filetée massive (12) préfabriquée par le procédé de moulage par injection est d'une autre couleur que celle du contenant (10), p. ex. rouge pour indiquer un produit rempli dangereux.
